(19)

Europäisches
Patentamt
European
Patent Office
Office européen
des brevets

(11) **EP 4 455 214 A1**

(12) **EUROPEAN PATENT APPLICATION**
published in accordance with Art. 153(4) EPC

(43) Date of publication:
**30.10.2024  Bulletin 2024/44**

(21) Application number: **22911158.8**

(22) Date of filing: **19.12.2022**

(51) International Patent Classification (IPC):
*C08L 77/06* (2006.01)    *C08G 69/26* (2006.01)
*C08K 3/16* (2006.01)    *C08K 3/24* (2006.01)

(52) Cooperative Patent Classification (CPC):
**C08G 69/26; C08K 3/16; C08K 3/24; C08L 77/06**

(86) International application number:
**PCT/JP2022/046616**

(87) International publication number:
**WO 2023/120456 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2021  JP 2021206203**

(71) Applicant: **Kuraray Co., Ltd.**
**Kurashiki-shi, Okayama 710-0801 (JP)**

(72) Inventors:
• **SUGAI, Naoto**
  **Tsukuba-shi, Ibaraki 305-0841 (JP)**
• **NANYA, Atsushi**
  **Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54) **POLYAMIDE COMPOSITION**

(57)    Provided is a polyamide composition, which has high moldability and excellent heat resistance and chemical resistance. The polyamide composition contains a polyamide (A), a copper compound (B 1) and a metal halide (B2), and in which the polyamide (A) comprises a diamine unit (X) and a dicarboxylic acid unit (Y), the diamine unit (X) contains 0.1 mol% or more and less than 36 mol% of a diamine unit (X1), and the diamine unit (X1) is a diamine unit derived from an aliphatic diamine, in which the aliphatic diamine has 6 to 10 carbon atoms, the aliphatic diamine having an alkyl group having 2 or 3 carbon atoms bonded to a carbon atom at 2-position when a carbon atom to which any one of two amino groups is bonded is taken as 1-position.

EP 4 455 214 A1

**Description**

Technical Field

The present invention relates to a polyamide composition, which contains a polyamide containing a specific diamine unit having a branched chain and a dicarboxylic acid unit, and contains a copper compound and a metal halide.

Background Art

Crystalline polyamides represented by nylon 6, nylon 66, and the like are widely used for industrial parts because of their excellent heat resistance, mechanical properties, moldability, and the like. For example, in automotive applications, replacement of metal parts to plastic parts has been promoted from the viewpoint of weight reduction and design flexibility, and crystalline polyamides excellent in the above properties are often used. However, the performance required for plastic materials from the viewpoint of improving fuel efficiency and complying with environmental regulations has become severe, and materials with more excellent performance from the viewpoint of heat resistance, chemical resistance, and the like are required.

In addition, from the viewpoint of reducing the production cost of parts, there is a demand for a material for which the time required to cool and solidify from a molten state is short, that is, a material having a high crystallization rate. When a material has a high crystallization rate, the moldability is improved, the time required for molding one part can be shortened, and the production efficiency can be improved. Therefore, other properties such as heat resistance and chemical resistance are required to be good while having high moldability.

PTL 1 discloses a polyamide composition which contains a polyamide obtained by polymerizing a diamine containing at least 50 mol% of a diamine having a branched structure in the main chain and a dicarboxylic acid containing at least 50 mol% of an aliphatic dicarboxylic acid, and contains titanium oxide particles. PTL 1 describes that the polyamide composition is excellent in flowability, toughness, heat discoloration resistance, and processability.

Also, PTL 2 discloses a method for producing a polyamide composition containing a constituent unit derived from a diamine having a methyl or ethyl branch.

Citation List

Patent Literature

PTL 1: JP2011-080055A
PTL 2: JP2017-517594A

Summary of Invention

Technical Problem

In PTLs 1 and 2, a methyl group, an ethyl group, an n-propyl group, and the like are mentioned as substituents branched from a main chain of a constituent unit derived from a diamine forming a polyamide. However, only a diamine having a methyl group as a branched chain is specifically described in these documents. In any of the documents, there is no specific disclosure of a polyamide containing a constituent unit derived from a branched diamine having a substituent longer than a methyl group, in other words, a substituent having a larger number of carbon atoms than that of a methyl group as a branched chain. Further, none of the documents discloses an attempt to achieve both moldability and other properties of a polyamide composition using a polyamide having the structure.

Therefore, an object of the present invention is to provide a polyamide composition having high moldability and excellent heat resistance and chemical resistance.

Solution to Problem

As a result of intensive studies to solve the above problems, the present inventor has conceived the following present invention and found that the problems can be solved.

That is, the present invention is as follows.

[1] A polyamide composition, which contains a polyamide (A), a copper compound (B1) and a metal halide (B2), wherein

the polyamide (A) comprises a diamine unit (X) and a dicarboxylic acid unit (Y),
the diamine unit (X) contains 0.1 mol% or more and less than 36 mol% of a diamine unit (X1), and
the diamine unit (X1) is a constituent unit derived from an aliphatic diamine, wherein the aliphatic diamine has 6 to 10 carbon atoms, the aliphatic diamine having an alkyl group having 2 or 3 carbon atoms bonded to a carbon atom at 2-position when a carbon atom to which any one of two amino groups is bonded is taken as 1-position.

[2] The polyamide composition according to the above [1], wherein the diamine unit (X1) is a constituent unit derived from the aliphatic diamine having 9 carbon atoms.
[3] The polyamide composition according to the above [1] or [2], wherein the diamine unit (X1) is a constituent unit derived from at least one selected from the group consisting of 2-ethyl-1,7-heptanediamine and 2-propyl-1,6-hexanediamine.
[4] The polyamide composition according to any one of the above [1] to [3], wherein the diamine unit (X) contains 1 to 10 mol% of the diamine unit (X1).
[5] The polyamide composition according to any one of the above [1] to [4], wherein the diamine unit (X) further contains a diamine unit (X2) which is a diamine unit other than the diamine unit (X1), and the diamine unit (X2) is a constituent unit derived from at least one selected from the group consisting of a linear aliphatic diamine, a branched aliphatic diamine other than the aliphatic diamine constituting the diamine unit (X1), an alicyclic diamine, and an aromatic diamine.
[6] The polyamide composition according to the above [5], wherein the diamine unit (X2) is a constituent unit derived from at least one selected from the group consisting of a linear aliphatic diamine and a branched aliphatic diamine having a methyl group as a branched chain.
[7] The polyamide composition according to the above [5] or [6], wherein the diamine unit (X2) is a constituent unit derived from a diamine having 6 to 10 carbon atoms.
[8] The polyamide composition according to any one of the above [5] to [7], wherein the diamine unit (X2) is a constituent unit derived from at least one selected from the group consisting of 1,6-hexanediamine, 1,9-nonanediamine, 1,10-decanediamine, 2-methyl-1,5-pentanediamine, and 2-methyl-1,8-octanediamine.
[9] The polyamide composition according to any one of the above [1] to [8], wherein the dicarboxylic acid unit (Y) contains a constituent unit derived from at least one selected from the group consisting of an aliphatic dicarboxylic acid, an aromatic dicarboxylic acid, and an alicyclic dicarboxylic acid.
[10] The polyamide composition according to any one of the above [1] to [9], wherein the dicarboxylic acid unit (Y) contains a constituent unit derived from at least one selected from the group consisting of terephthalic acid, cyclohexanedicarboxylic acid, and naphthalenedicarboxylic acid.
[11] The polyamide composition according to any one of the above [1] to [10], wherein the copper compound (B 1) is contained in an amount of 0.01 parts by mass or more and 2 parts by mass or less with respect to 100 parts by mass of the polyamide (A).
[12] The polyamide composition according to any one of the above [1] to [11], wherein the copper compound (B 1) is at least one selected from the group consisting of copper iodide, copper bromide, and copper acetate.
[13] The polyamide composition according to any one of the above [1] to [12], wherein the metal halide (B2) is contained in an amount of 0.05 parts by mass or more and 10 parts by mass or less with respect to 100 parts by mass of the polyamide (A).
[14] The polyamide composition according to any one of the above [1] to [13], wherein the metal halide (B2) is at least one selected from the group consisting of potassium iodide and potassium bromide.
[15] A molded article containing the polyamide composition according to any one of the above [1] to [14].
[16] The molded article according to the above [15], which is a film.

Advantageous Effects of Invention

According to the present invention, a polyamide composition having high moldability and excellent heat resistance and chemical resistance can be provided.

Description of Embodiments

Hereinafter, an example of an embodiment of the present invention (hereinafter may be referred to as "the present embodiment") will be described. However, the embodiments described below are examples for embodying the technical idea of the present invention, and the present invention is not limited to the following description.

In addition, in the description herein, preferred embodiments are shown, but a combination of two or more of individual preferred embodiments is also a preferred embodiment. Regarding the matters indicated by the numerical ranges, in a case where there are several numerical ranges, it is possible to selectively combine the lower limit value and the upper limit value thereof to obtain a preferred embodiment.

In the description herein, when there is a description of a numerical range of "XX to YY", it means "XX or more and YY or less".

Further, in the description herein, the phrase "- unit" (wherein "-" represents a monomer) means "a constituent unit derived from -", for example, a "dicarboxylic acid unit" means "a constituent unit derived from a dicarboxylic acid", and a "diamine unit" means "a constituent unit derived from a diamine".

[1] Polyamide Composition

A polyamide composition of the present embodiment contains a polyamide (A) containing a diamine unit (X) and a dicarboxylic acid unit (Y). The diamine unit (X) contains 0.1 mol% or more and less than 36 mol% of a diamine unit (X1) being a constituent unit derived from an aliphatic diamine, in which the aliphatic diamine has 6 to 10 carbon atoms, the aliphatic diamine having an alkyl group having 2 or 3 carbon atoms bonded to a carbon atom at 2-position when a carbon atom to which any one of two amino groups is bonded is taken as 1-position.

The polyamide composition has high moldability and exhibits excellent heat resistance and chemical resistance.

In general, when a component having a large excluded volume such as a branched chain is contained in a polymer skeleton, molecular chains are less likely to be regularly arranged, and thus the polymer tends to exhibit a low crystallization rate. However, in the polyamide composition of the present embodiment, by using the polyamide (A) containing a specific amount of a diamine component that has an alkyl group having 2 or 3 carbon atoms, such as an ethyl group or a propyl group, as a branched chain, a high crystallization rate is unexpectedly exhibited.

In addition, in general, when a polyamide has a bulky substituent such as a branched chain, the polyamide is less likely to have a crystal structure, and the melting point tends to decrease. However, even if the polyamide (A) contained in the polyamide composition of the present embodiment has a relatively bulky substituent having 2 or 3 carbon atoms, such as an ethyl group or a propyl group, as a branched chain, the decrease in the melting point is small.

Further, a glass transition temperature is a property such that the lower the molecular mobility of the amorphous portion is, the higher the glass transition temperature is. Therefore, when a component having high molecular mobility such as a branched chain is contained, the glass transition temperature generally tends to become lower. However, the polyamide (A) contained in the polyamide composition of the present embodiment shows unexpectedly little decrease in the glass transition temperature.

One of the reasons why the polyamide (A) exhibits the above-mentioned properties is considered that the number of carbon atoms in the branched chain, the position of the branched chain, and the amount of the branched chain included in the diamine unit (X) contained in the polyamide (A) may affect the improvement of the crystallization rate while preventing a significant decrease in heat resistance and chemical resistance. However, the detailed reason is not clear.

It is considered that by the incorporation of the copper compound (B 1) and the metal halide (B2) in addition to the incorporation of the polyamide (A) having the above-mentioned properties in the polyamide composition of the present embodiment, the heat resistance and chemical resistance are enhanced without significantly affecting the crystallization rate, so that high moldability and excellent heat resistance and chemical resistance are exhibited.

[Polyamide (A)]

The polyamide (A) contained in the polyamide composition contains a diamine unit (X) and a dicarboxylic acid unit (Y). The configuration of the polyamide (A) will be described below.

<Diamine Unit (X)>

The diamine unit (X) contains a diamine unit (X1) being a constituent unit derived from an aliphatic diamine, in which the aliphatic diamine has 6 to 10 carbon atoms, the aliphatic diamine having an alkyl group having 2 or 3 carbon atoms bonded to a carbon atom at 2-position when a carbon atom to which any one of two amino groups is bonded is taken as 1-position.

(Diamine Unit (X1))

When assuming a linear aliphatic chain having carbon atoms, to which two amino groups are bonded, respectively, as the carbon atoms at both ends, the diamine unit (X1) is a constituent unit derived from an aliphatic diamine having a structure in which one of the hydrogen atoms on a carbon atom at the 2-position adjacent to a carbon atom at the 1-position to which any one of the amino groups is bonded is substituted with an alkyl group having 2 or 3 carbon atoms. Hereinafter, the constituent unit derived from an aliphatic diamine having a structure in which one of the hydrogen atoms on a carbon atom at the 2-position is substituted with an alkyl group having 2 or 3 carbon atoms is also referred to as a "branched aliphatic diamine unit".

The number of carbon atoms of the branched aliphatic diamine unit constituting the diamine unit (X1) is preferably 8 to 10, and more preferably 9. When the number of carbon atoms is within the above-mentioned range, the polymerization reaction between a dicarboxylic acid and a diamine proceeds well, and the physical properties of the polyamide (A) are more easily improved.

In the branched aliphatic diamine unit constituting the diamine unit (X1), the alkyl group having 2 or 3 carbon atoms and bonded to a carbon atom at the 2-position is preferably at least one selected from the group consisting of an ethyl group, a propyl group, and an isopropyl group, and more preferably at least one selected from the group consisting of an ethyl group and a propyl group. When the number of carbon atoms of the alkyl group bonded to a carbon atom at the 2-position is 1 or is 4 or more, there is a possibility that the crystallization rate is not improved and the heat resistance decreases.

The branched aliphatic diamine used for forming the diamine unit (X1) may have a branched chain such as a methyl group (referred to as "additional branched chain") at a carbon atom other than the carbon atom at the 2-position as long as the effects of the present invention are not impaired. The number of additional branched chains is preferably one or less, and it is more preferable that the diamine unit (X1) does not contain additional branched chains.

Examples of the diamine unit (X1) include constituent units derived from 2-ethyl-1,4-butanediamine, 2-ethyl-1,5-pentanediamine, 2-ethyl-1,6-hexanediamine, 2-ethyl-1,7-heptanediamine, 2-ethyl-1,8-octanediamine, 2-propyl-1,5-pentanediamine, 2-propyl-1,6-hexanediamine, 2-propyl-1,7-heptanediamine, and 2,4-diethyl-1,6-hexanediamine. Only one kind of these constituent units may be contained or two or more kinds thereof may be contained.

In particular, from the viewpoint that a more excellent improvement in crystallization rate can be expected, and also the hydrolysis resistance of a molded article to be obtained is made excellent, it is preferable that the diamine unit (X1) is a constituent unit derived from at least one selected from the group consisting of 2-ethyl-1,7-heptanediamine and 2-propyl-1,6-hexanediamine.

The diamine unit (X1) is contained in an amount of 0.1 mol% or more and less than 36 mol% in the diamine unit (X). When the content of the diamine unit (X1) is less than 0.1 mol%, it is difficult to sufficiently improve the crystallization rate, and when the content is 36 mol% or more, the heat resistance may excessively decrease.

From the viewpoint of obtaining a polyamide having a more excellent balance between heat resistance and crystallization rate, the content of the diamine unit (X1) in the diamine unit (X) is preferably 0.5 mol% or more, more preferably 1 mol% or more, still more preferably 3 mol% or more, and even more preferably 5 mol% or more. Also, from the above viewpoint, the content of the diamine unit (X1) in the diamine unit (X) is preferably 35 mol% or less, more preferably 30 mol% or less, still more preferably 25 mol% or less, even more preferably 20 mol% or less, even more preferably 18 mol% or less, even more preferably 15 mol% or less, and even more preferably 10 mol% or less.

In other words, the diamine unit (X) contains the diamine unit (X1) in an amount of preferably 0.5 to 35 mol%, more preferably 0.5 to 30 mol%, still more preferably 0.5 to 25 mol%, even more preferably 0.5 to 20 mol%, even more preferably 0.5 to 18 mol%, even more preferably 1 to 18 mol%, even more preferably 1 to 15 mol%, and particularly preferably 1 to 10 mol%.

In addition, as one preferred embodiment, when the diamine unit (X1) is a constituent unit derived from at least one diamine selected from the group consisting of 2-ethyl-1,7-heptanediamine and 2-propyl-1,6-hexanediamine, an example of the content of each constituent unit is as follows.

The content of the constituent unit derived from 2-ethyl-1,7-heptanediamine in the diamine unit (X) is preferably 0.5 mol% or more, and more preferably 2 mol% or more. Also, the content is preferably 20 mol% or less, more preferably 16 mol% or less, still more preferably 15 mol% or less, even more preferably 12 mol% or less, and even more preferably 10 mol% or less. In other words, the content of the constituent unit derived from 2-ethyl-1,7-heptanediamine in the diamine unit (X) is preferably 0.5 to 20 mol%.

The content of the constituent unit derived from 2-propyl-1,6-hexanediamine in the diamine unit (X) is preferably 0.1 mol% or more, and more preferably 0.5 mol% or more. Also, the content is preferably 5 mol% or less, more preferably 3 mol% or less, still more preferably 2 mol% or less, and even more preferably 1.5 mol% or less. In other words, the content of the constituent unit derived from 2-propyl-1,6-hexanediamine in the diamine unit (X) is preferably 0.1 to 5 mol%.

(Diamine Unit (X2))

The polyamide (A) may contain, as the diamine unit (X), a diamine unit other than the diamine unit (X1) (hereinafter, also referred to as "diamine unit (X2)").

The diamine unit (X2) is a constituent unit derived from a diamine having preferably 6 to 10 carbon atoms, more preferably 8 to 10 carbon atoms, and still more preferably 9 carbon atoms from the viewpoint of facilitating the polymerization reaction between a dicarboxylic acid and a diamine to proceed well.

Examples of the diamine unit (X2) include a constituent unit derived from at least one selected from the group consisting of a linear aliphatic diamine, a branched aliphatic diamine other than the aliphatic diamine constituting the diamine unit (X), an alicyclic diamine, and an aromatic diamine.

Examples of the linear aliphatic diamine include ethylenediamine, 1,3-propanediamine, 1,4-butanediamine, 1,5-pentanediamine, 1,6-hexanediamine, 1,7-heptanediamine, 1,8-octanediamine, 1,9-nonandiamine, 1,10-decanediamine, 1,11-undecanediamine, 1,12-dodecanediamine, 1,13-tridecanediamine, 1,14-tetradecandiamine, 1,15-pentadecanediamine, 1,16-hexadecandiamine, 1,17-heptadecanediamine, and 1,18-octadecandiamine.

Examples of the branched aliphatic diamine include 1, 2-propanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, and 5-methyl-1,9-nonanediamine.

Examples of the alicyclic diamine include cyclohexanediamine, methylcyclohexanediamine, norbornanedimethylamine, tricyclodecanedimethyldiamine, bis(4-amino-3-ethylcyclohexyl)methane, and bis(4-amino-3-ethyl-5-methylcyclohexyl)methane.

Examples of the aromatic diamine include p-phenylenediamine, m-phenylenediamine, p-xylylenediamine, m-xylylenediamine, 4,4'-diaminodiphenylmethane, 4,4'-diaminodiphenyl sulfone, 4,4'-diaminodiphenyl ether, and 4,4'-methylene-bis-2,6-diethylaniline.

The constituent unit derived from the diamine may be only one kind or two or more kinds.

Among the above-mentioned diamine units (X2), a constituent unit derived from at least one diamine selected from the group consisting of a linear aliphatic diamine, and a branched aliphatic diamine having a methyl group as a branched chain is more preferable.

From the viewpoint of easily exhibiting the effects of the present invention more remarkably, the diamine unit (X2) is more preferably a constituent unit derived from at least one diamine selected from the group consisting of 1,6-hexanediamine, 1,9-nonanediamine, 1,10-decanediamine, 2-methyl-1,5-pentanediamine, and 2-methyl-1,8-octanediamine.

<Dicarboxylic Acid Unit (Y)>

As the dicarboxylic acid unit (Y), an arbitrary dicarboxylic acid unit can be contained.

The dicarboxylic acid unit (Y) can contain, for example, a constituent unit derived from at least one dicarboxylic acid selected from the group consisting of an aliphatic dicarboxylic acid, an aromatic dicarboxylic acid, and an alicyclic dicarboxylic acid.

Examples of the aliphatic dicarboxylic acid include oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulphone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid.

Examples of the alicyclic dicarboxylic acid include 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid.

As the constituent unit derived from the dicarboxylic acid, only one kind may be contained or two or more kinds may be contained.

From the viewpoint of making it easier to exhibit the effects of the present invention more remarkably, the dicarboxylic acid unit (Y) preferably contains a constituent unit derived from at least one dicarboxylic acid selected from the group consisting of an aromatic dicarboxylic acid and an alicyclic dicarboxylic acid, and more preferably contains a constituent unit derived from at least one dicarboxylic acid selected from the group consisting of terephthalic acid, cyclohexanedicarboxylic acid, and naphthalenedicarboxylic acid.

From the viewpoint of making it easier to exhibit the effects of the present invention more remarkably, the total content of constituent units derived from an aliphatic dicarboxylic acid, an aromatic dicarboxylic acid, and an alicyclic dicarboxylic acid in the dicarboxylic acid unit (Y) is preferably 80 mol% or more, more preferably 90 mol%, still more preferably 95 mol% or more, and may be 100 mol%. In other words, the total content of constituent units derived from an aliphatic dicarboxylic acid, an aromatic dicarboxylic acid, and an alicyclic dicarboxylic acid in the dicarboxylic acid unit (Y) is preferably 80 to 100 mol%.

In addition, from the same viewpoint, the total content of constituent units derived from terephthalic acid, cyclohexanedicarboxylic acid, and naphthalenedicarboxylic acid in the dicarboxylic acid unit (Y) is preferably 80 mol% or more, more preferably 90 mol%, still more preferably 95 mol% or more, and may be 100 mol%. In other words, the total content of constituent units derived from terephthalic acid, cyclohexanedicarboxylic acid, and naphthalenedicarboxylic acid in the dicarboxylic acid unit (Y) is preferably 80 to 100 mol%.

The molar ratio of the diamine unit (X) to the dicarboxylic acid unit (Y) [(diamine unit (X))/(dicarboxylic acid unit (Y))] in the polyamide (A) is preferably 45/55 to 55/45. When the molar ratio of the diamine unit (X) to the dicarboxylic acid unit (Y) is within the above-mentioned range, the polymerization reaction proceeds well, and a polyamide excellent in desired physical properties is easily obtained.

The molar ratio of the diamine unit (X) to the dicarboxylic acid unit (Y) can be adjusted in accordance with the blending ratio (molar ratio) of the raw material diamine to the raw material dicarboxylic acid.

The total proportion of the diamine unit (X) and the dicarboxylic acid unit (Y) in the polyamide (A) (the proportion of the total number of moles of the dicarboxylic acid unit (Y) and the diamine unit (X) to the number of moles of all the constituent units constituting the polyamide (A)) is preferably 70 mol% or more, more preferably 80 mol% or more, still more preferably 90 mol% or more, even more preferably 95 mol% or more, and further may be 100 mol%. When the total proportion of the diamine unit (X) and the dicarboxylic acid unit (Y) is within the above-mentioned range, a polyamide (A) more excellent in desired physical properties can be obtained. In other words, the total proportion of the diamine unit (X) and the dicarboxylic acid unit (Y) in the polyamide (A) is preferably 70 to 100 mol%.

<Other Constituent Units>

The polyamide (A) may further contain other constituent units in addition to the diamine unit (X) and the dicarboxylic acid unit (Y). For example, the polyamide (A) may further contain an aminocarboxylic acid unit, a polyvalent carboxylic acid unit, and a terminal blocking agent unit.

(Aminocarboxylic Acid Unit)

Examples of the aminocarboxylic acid unit include constituent units derived from lactams such as caprolactam and lauryllactam; and aminocarboxylic acids such as 11-aminoundecanoic acid and 12-aminododecanoic acid. The content of the aminocarboxylic acid unit in the polyamide (A) is preferably 40 mol% or less, and more preferably 20 mol% or less with respect to 100 mol% of the total of the diamine unit (X) and the dicarboxylic acid unit (Y) constituting the polyamide (A). In other words, the content of the aminocarboxylic acid unit in the polyamide (A) is preferably 0 to 40 mol% with respect to 100 mol% of the total of the diamine unit (X) and the dicarboxylic acid unit (Y) constituting the polyamide (A).

(Polyvalent Carboxylic Acid Unit)

The polyamide (A) may also contain a constituent unit derived from a polyvalent carboxylic acid having a valence of 3 or higher, such as trimellitic acid, trimesic acid, or pyromellitic acid, within a range in which melt molding is possible, as long as the effects of the present invention are not impaired.

(Terminal Blocking Agent Unit)

The polyamide (A) may contain a constituent unit derived from a terminal blocking agent (terminal blocking agent unit).

The amount of the terminal blocking agent unit is preferably 1.0 mol% or more, and more preferably 2.0 mol% or more, and is preferably 10 mol% or less, and more preferably 5.0 mol% or less with respect to 100 mol% of the diamine unit (X). In other words, the amount of the terminal blocking agent unit is preferably 1.0 to 10 mol% with respect to 100 mol% of the diamine unit (X).

When the content of the terminal blocking agent unit is within the above-mentioned range, a polyamide (A) excellent in desired physical properties is easily obtained. The content of the terminal blocking agent unit can be made to fall within the above-mentioned desired range by appropriately adjusting the amount of the terminal blocking agent at the time of charging the polymerization raw materials. In consideration of volatilization of the monomer component during polymerization, it is desirable to finely adjust the amount of the terminal blocking agent to be charged so that a desired amount of the terminal blocking agent unit is introduced into the obtained polyamide (A).

Examples of the method for obtaining the content of the terminal blocking agent unit in the polyamide (A) include, as described in JPH07-228690A, a method in which a solution viscosity is measured, the total amount of terminal groups is calculated from the relational formula between the solution viscosity and the number-average molecular weight, and the amount of amino groups and the amount of carboxy groups obtained by titration are subtracted therefrom, and a method in which $^1$H-NMR is used to obtain the content based on the integrated values of signals corresponding to each of the diamine unit and the terminal blocking agent unit, and the latter is preferable.

As the terminal blocking agent, a monofunctional compound having reactivity with a terminal amino group or a terminal carboxy group can be used. Specific examples thereof include a monocarboxylic acid, an acid anhydride, a monoisocyanate, a monoacid halide, a monoester, a monoalcohol, and a monoamine. From the viewpoint of reactivity, stability of the blocked terminal, and the like, a monocarboxylic acid is preferable as the terminal blocking agent for the terminal amino group, and a monoamine is preferable as the terminal blocking agent for the terminal carboxy group. From the viewpoint of ease of handling and the like, a monocarboxylic acid is more preferable as the terminal blocking agent.

The monocarboxylic acid used as the terminal blocking agent is not particularly limited as long as it has reactivity with an amino group, and examples thereof include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, $\alpha$-naphthalenecarboxylic acid, $\beta$-naphthalenecarboxylic acid, methylnaphthalenecarboxylic acid, and phenylacetic acid; and arbitrary mixtures thereof. Among these, at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferable from the viewpoint of reactivity, stability of the blocked terminal, price, and the like.

The monoamine used as the terminal blocking agent is not particularly limited as long as it has reactivity with a carboxy group, and examples thereof include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and arbitrary mixtures thereof. Among these, at least one selected from the group consisting of butylamine, hexylamine, octylamine, decylamine, stearylamine, cyclohexylamine, and aniline is preferable from the viewpoint of reactivity, a high boiling point, stability of the blocked terminal, price, and the like.

<Content of Polyamide (A)>

From the viewpoint of making it easier to ensure good moldability, heat resistance, and chemical resistance, the content of the polyamide (A) contained in the total amount of the polyamide composition of the present embodiment is preferably 30 to 99.9% by mass, more preferably 40 to 99.8% by mass, and still more preferably 45 to 99.7% by mass.

<Physical Properties of Polyamide (A)>

The polyamide (A) preferably has an inherent viscosity of 0.5 dL/g or more, and more preferably 0.7 dL/g or more. Also, the inherent viscosity is preferably 2.0 dL/g or less, and more preferably 1.5 dL/g or less. In other words, the inherent viscosity of the polyamide (A) is preferably 0.5 to 2.0 dL/g. When the inherent viscosity is within the above-mentioned range, a polyamide more excellent in desired physical properties is more easily obtained.

The inherent viscosity of the polyamide (A) can be obtained by measuring the flow-down time of a solution thereof using concentrated sulfuric acid as the solvent having a concentration of 0.2 g/dL and a temperature of 30°C, and more specifically, can be obtained by the method described in Examples.

The polyamide (A) preferably has a melting point of 250°C or higher, and more preferably 280°C or higher. When the melting point is within the above-mentioned range, a polyamide (A) having excellent heat resistance can be obtained. The upper limit of the melting point of the polyamide (A) is not particularly limited, but is preferably 330°C or lower also in consideration of moldability and the like. In other words, the melting point of the polyamide (A) is preferably 250 to 300°C, and more preferably 280 to 330°C.

The melting point of the polyamide (A) can be obtained as a peak temperature of an endothermic peak that appears when the temperature is raised at a rate of 10°C/min using a differential scanning calorimetry (DSC) analyzer, and more specifically, can be obtained by the method described in Examples.

The polyamide (A) preferably has a glass transition temperature of 110°C or higher, and more preferably 120°C or higher. When the glass transition temperature is within the above-mentioned range, a polyamide (A) having excellent heat resistance can be obtained.

The glass transition temperature of the polyamide (A) can be obtained as a temperature at the inflection point that appears when the temperature is raised at a rate of 20°C/min using a differential scanning calorimetry (DSC) analyzer, and more specifically, can be obtained by the method described in Examples.

The polyamide (A) preferably has a crystallization rate of $0.02°C^{-1}$ or more, and more preferably $0.04°C^{-1}$ or more. When the crystallization rate is within the above-mentioned range, a polyamide excellent in productivity is more easily obtained.

The crystallization rate can be obtained by the following formula (Formula 1).

$$\text{Crystallization rate } (°C^{-1}) = 1/(\text{melting point } (°C) - \text{crystallization temperature } (°C))$$

(Formula 1)

From the viewpoint of heat resistance and productivity, the crystallization temperature of the polyamide (A) is preferably 200°C or higher, more preferably 210°C or higher, and still more preferably 220°C or higher, and is preferably 310°C or lower, more preferably 300°C or lower, and still more preferably 290°C or lower. In other words, the crystallization temperature of the polyamide (A) is preferably 200 to 310°C.

The crystallization temperature of the polyamide (A) can be obtained as a peak temperature of an exothermic peak that appears when the temperature is raised to a predetermined temperature at a rate of 10°C/min and then the temperature is lowered using a differential scanning calorimetry (DSC) analyzer, and more specifically, can be obtained by the method described in Examples.

The amount of terminal amino groups ($[NH_2]$) in the molecular chain of the polyamide (A) is preferably 5 $\mu$mol/g or more, and more preferably 10 $\mu$mol/g or more. Also, the amount of terminal amino groups is preferably 160 $\mu$mol/g or less, more preferably 100 $\mu$mol/g or less, and still more preferably 90 $\mu$mol/g or less. In other words, the amount of terminal amino groups in the molecular chain of the polyamide (A) is preferably 5 to 160 $\mu$mol/g.

When the amount of terminal amino groups is equal to or more than the above-mentioned lower limit value, in a case where the polyamide composition contains a filler, sufficient adhesion to the filler, especially a fibrous filler, is ensured and the mechanical properties are less likely to deteriorate, and also when the amount of terminal amino groups is equal to or less than the above-mentioned upper limit value, the progress of a crosslinking reaction between molecules is prevented and the heat resistance and the stability of the melt viscosity during processing are less likely to deteriorate.

The amount of terminal amino groups of the polyamide (A) can be obtained by titrating a phenol solution in which the polyamide (A) is dissolved using an aqueous hydrochloric acid solution, and more specifically, can be obtained by the method described in Examples.

The amount of terminal carboxy groups ($[COOH]$) in the molecular chain of the polyamide (A) is preferably 2 $\mu$mol/g or more, more preferably 5 $\mu$mol/g or more, and still more preferably 10 $\mu$mol/g or more. Also, the amount of terminal carboxy groups is preferably 100 $\mu$mol/g or less, and more preferably 90 $\mu$mol/g or less. In other words, the amount of terminal carboxy groups in the molecular chain of the polyamide (A) is preferably 2 to 100 $\mu$mol/g.

When the amount of terminal carboxy groups is equal to or more than the above-mentioned lower limit value, in a case where the polyamide composition contains a filler, sufficient adhesion to the filler, especially a fibrous filler, is ensured and the mechanical properties are less likely to deteriorate, and also when the amount of terminal carboxy groups is equal to or less than the above-mentioned upper limit value, hydrolysis in an acidic environment is prevented and the chemical resistance is less likely to deteriorate.

The amount of terminal carboxy groups of the polyamide (A) can be obtained by titrating a cresol solution in which the polyamide (A) is dissolved using a potassium hydroxide solution, and more specifically, can be obtained by the method described in Examples.

The ratio ($[NH_2]/[COOH]$) of the amount of terminal amino groups ($[NH_2]$) to the amount of terminal carboxy groups ($[COOH]$) in the molecular chain of the polyamide (A) is preferably 0.1 or more, and more preferably 0.3 or more. Also, the ratio is preferably 50 or less, more preferably 10 or less, and still more preferably 6 or less. In other words, the ratio ($[NH_2]/[COOH]$) in the polyamide (A) is preferably 0.1 to 50.

<Method for Producing Polyamide (A)>

The polyamide (A) can be produced by any method known as a method for producing a polyamide. For example, the polyamide (A) can be produced by a method such as a melt polymerization method, a solid phase polymerization method, or a melt extrusion polymerization method using a dicarboxylic acid and a diamine as raw materials. Among these, a solid phase polymerization method is preferable from the viewpoint that thermal deterioration during polymerization can be more favorably prevented, and the like.

The polyamide (A) can be produced, for example, by first adding a diamine, a dicarboxylic acid, and optionally a catalyst and a terminal blocking agent all at once to produce a nylon salt, then heating and polymerizing the nylon salt at a temperature of 200 to 250°C to form a prepolymer, and further solid phase polymerizing the prepolymer or polymerizing the prepolymer using a melt extruder. When the final stage of the polymerization is performed by solid phase polymerization, the polymerization is preferably performed under reduced pressure or in an inert gas stream, and when the polymerization temperature is within the range of 200 to 280°C, the polymerization rate is high, the productivity is excellent, and coloring and gelling can be effectively prevented. When the final stage of the polymerization is performed using a melt extruder, the polymerization temperature is preferably 370°C or lower, and when the polymerization is performed under such conditions, a polyamide with almost no decomposition and little deterioration is obtained.

Examples of the catalyst that can be used when the polyamide (A) is produced include phosphoric acid, phosphorous acid, hypophosphorous acid, and a salt or an ester thereof. Examples of the salt or ester include a salt of phosphoric acid, phosphorous acid, or hypophosphorous acid with a metal such as potassium, sodium, magnesium, vanadium, calcium, zinc, cobalt, manganese, tin, tungsten, germanium, titanium, or antimony; an ammonium salt of phosphoric acid, phosphorous acid, or hypophosphorous acid; and an ethyl ester, an isopropyl ester, a butyl ester, a hexyl ester, an isodecyl ester, an octadecyl ester, a decyl ester, a stearyl ester, and a phenyl ester of phosphoric acid, phosphorous acid, or hypophosphorous acid.

The amount of the catalyst used is preferably 0.01% by mass or more, and more preferably 0.05% by mass or more, and is preferably 1.0% by mass or less, and more preferably 0.5% by mass or less with respect to 100% by mass of the total mass of the raw materials. In other words, the amount of the catalyst used is preferably 0.01 to 1.0% by mass with respect to 100% by mass of the total mass of the raw materials.

When the amount of the catalyst used is equal to or more than the above-mentioned lower limit, the polymerization proceeds well. When the amount of the catalyst used is equal to or less than the above-mentioned upper limit, impurities derived from the catalyst are less likely to be generated, and for example, when the polyamide composition is formed into a film, a defect due to the impurities can be prevented.

[Copper Compound (B1) and Metal Halide (B2)]

The polyamide composition of the present embodiment contains a copper compound (B1) and a metal halide (B2). By the incorporation of the copper compound (B1) and the metal halide (B2), a polyamide composition having heat resistance, particularly heat resistance and heat aging resistance at a high temperature equal to or higher than 150°C can be obtained without impairing the properties of the polyamide (A) such as chemical resistance, low water absorption, flowability, and mechanical properties such as tensile properties. The copper compound (B1) and the metal halide (B2) will be further described below.

<Copper Compound (B1)>

Examples of the copper compound (B1) include a copper halide, copper acetate, copper propionate, copper benzoate, copper adipate, copper terephthalate, copper isophthalate, copper salicylate, copper nicotinate, copper stearate, and a copper complex salt coordinated with a chelating agent such as ethylenediamine or ethylenediaminetetraacetic acid.

Examples of the copper halide include copper iodide; copper bromides such as cuprous bromide and cupric bromide; and copper chlorides such as cuprous chloride.

Among these copper compounds, at least one selected from the group consisting of copper halides and copper acetate is preferable, at least one selected from the group consisting of copper iodide, copper bromide, copper chloride, and copper acetate is more preferable, and at least one selected from the group consisting of copper iodide, copper bromide, and copper acetate is still more preferable from the viewpoint that the heat aging resistance is excellent and the metal corrosion of a screw or a cylinder part during extrusion can be prevented. As the copper compound (B1), one kind may be used alone or two or more kinds may be used in combination.

The content of the copper compound (B1) in the polyamide composition is preferably 0.01 parts by mass or more and 2 parts by mass or less, more preferably 0.1 parts by mass or more and 1.5 parts by mass or less, and still more preferably 0.5 parts by mass or more and 1.2 parts by mass or less with respect to 100 parts by mass of the polyamide (A). By setting the content of the copper compound (B1) within the above-mentioned range, the heat resistance, particularly high temperature heat resistance such as heat aging resistance is improved while preventing deterioration of the tensile properties of the obtained polyamide composition, and further it becomes easy to prevent copper deposition and metal corrosion during molding.

<Metal Halide (B2)>

As the metal halide (B2), a metal halide that does not fall under the copper compound (B1) can be used, and a salt of a metal element in group 1 or group 2 of the periodic table with a halogen is preferable. Examples thereof include potassium iodide, potassium bromide, potassium chloride, sodium iodide, and sodium chloride. Among these, at least one selected from the group consisting of potassium iodide and potassium bromide is preferable, and potassium iodide is more preferable from the viewpoint that the obtained polyamide composition is excellent in high temperature heat resistance such as heat aging resistance and can prevent metal corrosion. As the metal halide (B2), one kind may be used alone or two or more kinds may be used in combination.

The content of the metal halide (B2) in the polyamide composition is preferably 0.05 parts by mass or more and 10 parts by mass or less, more preferably 0.05 parts by mass or more and 5 parts by mass or less, and still more preferably 0.05 parts by mass or more and 1 part by mass or less with respect to 100 parts by mass of the polyamide (A). By setting the content of the metal halide (B2) within the above-mentioned range, the heat resistance, particularly high temperature heat resistance such as heat aging resistance is improved while preventing deterioration of the tensile properties of the obtained polyamide composition, and further it becomes easy to prevent copper deposition and metal corrosion during molding.

The polyamide composition preferably contains the copper compound (B1) and the metal halide (B2) so that the ratio (halogen/copper) of the total amount of moles of halogen to the total amount of moles of copper in the polyamide composition is 2/1 to 50/1. The ratio (halogen/copper) is more preferably 3/1 or more, still more preferably 4/1 or more, and even more preferably 5/1 or more, and is more preferably 45/1 or less, still more preferably 40 /1 or less, and even more preferably 30/1 or less.

When the ratio (halogen/copper) is equal to or more than the above-mentioned lower limit, it becomes easier to more effectively prevent copper deposition and metal corrosion during molding. When the ratio (halogen/copper) is equal to or less than the above-mentioned upper limit, it becomes easier to more effectively prevent corrosion of a screw or the like of a molding machine without impairing the mechanical properties such as tensile properties of the obtained polyamide composition.

The total content of the copper compound (B1) and the metal halide (B2) with respect to 100 parts by mass of the polyamide (A) is preferably 0.06 parts by mass or more and 21 parts by mass or less, more preferably 0.1 parts by mass or more and 15 parts by mass or less, still more preferably 0.3 parts by mass or more and 10 parts by mass or less, and even more preferably 0.5 parts by mass or more and 5 parts by mass or less. When the total content of the copper compound (B 1) and the metal halide (B2) is within the above-mentioned range, high temperature heat resistance such as heat aging resistance is more easily improved while more effectively preventing a problem such as metal corrosion of the polyamide composition.

[Other Additives]

The polyamide composition may contain other additives as needed in addition to the polyamide (A), the copper compound (B1), and the metal halide (B2).

Examples of the other additives include an antioxidant such as a hindered phenol-based antioxidant, a hindered amine-based antioxidant, a phosphorus-based antioxidant, or a thio-based antioxidant; a colorant; a UV absorber; a light stabilizer; an antistatic agent; a flame retardant such as a brominated polymer, an antimony oxide, a metal hydroxide, or a phosphinate; a flame retardant aid; a nucleating agent; a plasticizer; a sliding agent; a lubricant; a dispersant; an oxygen absorber; a hydrogen sulfide adsorbent; an inorganic or organic fibrous filler such as a glass fiber, a carbon fiber, or a wholly aromatic polyamide fiber; a powdered filler such as wollastonite, silica, silica alumina, alumina, titanium dioxide, potassium titanate, magnesium hydroxide, molybdenum disulfide, a carbon nanotube, graphene, polytetrafluoroethylene, or ultra-high molecular weight polyethylene; a flaky filler such as hydrotalcite, a glass flake, mica, clay, montmorillonite, or kaolin; and an impact modifier such as an $\alpha$-olefin-based copolymer or rubber.

As the dispersant, one that can disperse the copper compound (B1) and the metal halide (B2) in the polyamide (A) can be preferably used. Examples of the dispersant include a higher fatty acid such as lauric acid; a higher fatty acid metal salt made of a higher fatty acid and a metal such as aluminum; a higher fatty acid amide such as ethylene bisstearylamide; a wax such as a polyethylene wax; and an organic compound having at least one amide group.

The inorganic or organic fibrous filler may be subjected to a surface treatment with a silane coupling agent, a titanate-based coupling agent, or the like as needed. The silane coupling agent is not particularly limited, but examples thereof include an aminosilane-based coupling agent such as $\gamma$-aminopropyltriethoxysilane, $\gamma$-aminopropyltrimethoxysilane, or N-$\beta$-(aminoethyl)-$\gamma$-aminopropylmethyldimethoxysilane; a mercaptosilane-based coupling agent such as $\gamma$-mercaptopropyltrimethoxysilane or $\gamma$-mercaptopropyltriethoxysilane; an epoxysilane-based coupling agent; and a vinylsilane-based coupling agent. Among these silane coupling agents, one kind may be used alone or two or more kinds may be used in combination. Among the above-mentioned silane coupling agents, an aminosilane-based coupling agent is preferable.

The inorganic or organic fibrous filler may be subjected to a treatment with a sizing agent as needed. Examples of the sizing agent include a copolymer containing, as constituent units, a carboxylic acid anhydride-containing unsaturated vinyl monomer unit and an unsaturated vinyl monomer unit excluding the carboxylic acid anhydride-containing unsaturated vinyl monomer, an epoxy compound, a polyurethane resin, a homopolymer of acrylic acid, a copolymer of acrylic acid with other copolymerizable monomer, and a salt thereof with a primary, secondary, or tertiary amine. Among these sizing agents, one kind may be used alone or two or more kinds may be used in combination.

The content of the above-mentioned other additives is not particularly limited as long as the effects of the present invention are not impaired, but is preferably 0.02 to 200 parts by mass, more preferably 0.03 to 120 parts by mass, and still more preferably 0.03 to 100 parts by mass with respect to 100 parts by mass of the polyamide (A).

[2] Method for Producing Polyamide Composition

The method for producing the polyamide composition is not particularly limited, and a method capable of uniformly mixing the polyamide (A), the copper compound (B 1), the metal halide (B2), and the above-mentioned other additives or the like to be used as needed can be preferably adopted.

Examples of a method for incorporating the copper compound (B1) and the metal halide (B2) in the polyamide (A) include a method in which the copper compound (B 1) and the metal halide (B2) are added individually or as a mixture during the polymerization step of the polyamide (A) (hereinafter sometimes abbreviated as a "production method 1") and a method in which the polyamide (A), the copper compound (B 1), and the metal halide (B2) are added individually or as a mixture during melt kneading (hereinafter sometimes abbreviated as a "production method 2"). When the copper compound (B 1) and the metal halide (B2) are added, they may be added in the form of a solid as they are or may be added in the form of an aqueous solution. With respect to other additives as well, an addition method similar to the production method 1 or the production method 2 can be adopted.

The phrase "during the polymerization step of the polyamide (A)" in the production method 1 means any step from a raw material monomer to completion of polymerization of the polyamide (A), and may be any stage. For the mixing when the "melt kneading" in the production method 2 is performed, a method of adding when the melt kneading is performed using a single screw extruder, a twin screw extruder, a kneader, a Banbury mixer, or the like is generally preferably adopted. The melt kneading conditions are not particularly limited, and examples thereof include a method of melt kneading for about 1 to 30 minutes at a temperature in the range of about 10 to 50°C higher than the melting point of the polyamide (A).

[3] Physical Properties of Polyamide Composition

The polyamide composition preferably has a flexural strength of 100 MPa or more, and more preferably 150 MPa or more.

Further, the polyamide composition preferably has a flexural modulus of 2 GPa or more, and more preferably 5 GPa or more.

When the flexural strength and the flexural modulus are within the above-mentioned ranges, a polyamide composition excellent in heat resistance and mechanical properties is more easily obtained.

The flexural strength and the flexural modulus of the polyamide composition can be obtained by injection molding the polyamide composition into a 4 mm thick test piece and then performing a flexural test, and more specifically, can be obtained by the method described in Examples.

[4] Molded Article

In one embodiment, a molded article containing the above-mentioned polyamide composition can be provided. A method for producing the molded article is not particularly limited, and a known method can be used. Further, an additive such as a chain extender may be added during molding, and further a treatment such as a heat treatment or electron beam crosslinking may be performed after molding.

The molded article of the present embodiment can be used as an electric part, an electronic part, an automobile part, an industrial part, a faucet part, a fiber, a film, a sheet, household goods, leisure goods, and other various molded articles of arbitrary shapes and applications.

Examples of the electric part and the electronic part include connectors such as an FPC connector, a B to B connector, a card connector, an SMT connector (such as a coaxial connector), and a memory card connector; SMT relays; SMT bobbins; sockets such as a memory socket and a CPU socket; switches such as a command switch and an SMT switch; optical components such as an optical fiber component and an optical sensor; LED application parts such as an LED reflector; and electronic substrates such as a solar cell substrate, an LED-mounted substrate, a flexible printed wiring board, and a resin-molded circuit board.

Examples of the automobile part include cooling parts such as a thermostat housing, a coolant control valve housing, a thermal management module housing, a radiator tank, a radiator hose, a water outlet, a water inlet, a water pump housing, and a rear joint; intake and exhaust system parts such as an intercooler tank, an intercooler case, a turbo duct pipe, an EGR cooler case, a resonator, a throttle body, an intake manifold, and a tail pipe; fuel system parts such as a fuel delivery pipe, a gasoline tank, a quick connector, a canister, a pump module, a fuel pipe, an oil strainer, a lock nut, and a seal material; structural components such as a mount bracket, a torque rod, and a cylinder head cover; drive system components such as a bearing retainer, a gear tensioner, a head lamp actuator gear, a throttle valve gear, a slide door roller, and a clutch peripheral component; brake system components such as an air brake tube; in-vehicle electrical components such as a wire harness connector in an engine room, a motor component, a sensor, an ABS bobbin, a combination switch, and an in-vehicle switch; and interior and exterior parts such as a slide door damper, a door mirror stay, a door mirror bracket, an inner mirror stay, a roof rail, an engine mount bracket, an inlet pipe of an air cleaner, a door checker, a plastic chain, an emblem, a clip, a breaker cover, a cup holder, an airbag, a fender, a spoiler, a radiator support, a radiator grille, a louver, an air scoop, a hood bulge, a back door, and a fuel sender module.

Examples of the industrial part include a gas pipe, an oil field drilling pipe, a hose, an anti-termite cable (such as a communication cable or a pass cable), a coating part of a powder coated product (such as an inner coating of a water pipe), a submarine oil field pipe, a pressure-resistant hose, a hydraulic tube, a paint tube, a housing and an impeller of a fuel pump, a separator, a supercharging duct, a butterfly valve, a conveyor roller bearing, a railroad tie spring holder, an outboard engine cover, a generator engine cover, a wind generator blade, an irrigation valve, a large switch, and a monofilament (an extruded yarn) of a fishing net or the like.

Examples of the faucet part include a housing of a part for transporting tap water, a housing of a part for storing tap water, a filter casing housing, a tap housing, a pipe housing, a housing of a bathroom faucet (such as a hot water switching valve or a water volume switching valve), a sanitary component housing, a kitchen faucet housing, a water heater housing, a valve part (a shut-off ball, a slide, or a cylinder), a valve part housing, a toilet water stopper housing, a housing in a shower head, a valve housing of a water heater, a joint for residential piping (such as underfloor piping), a joint for a bathroom faucet, a joint for tap water piping, a pipe joint, a water meter housing, a water meter part (a bearing, a propeller, or a pin), a water meter or a gas meter housing, a distributor housing, a valve/pump housing for a household apparatus, a steam-resistant part of a steam iron, an inner container of an electric kettle, a dishwasher part (a washing tank, a washing nozzle, a basket), a pump housing, a pump part (for example, a turbine wheel or an impeller), a housing of a water supply system (such as a hot water tank), a heating system housing, a cooling system housing, a water volume control valve, a pressure reducing valve, a relief valve, a solenoid valve, a three-way valve, a thermo valve, a hot water temperature sensor, a water volume sensor, and a bathtub adapter.

Examples of the fiber include an airbag base fabric, a heat-resistant filter, a reinforcing fiber, a brush bristle, a fishing line, a tire cord, an artificial turf, a carpet, and a fiber for a seat sheet.

Examples of the film and the sheet include heat-resistant adhesive tapes such as a heat-resistant masking tape and an industrial tape; materials for magnetic tapes such as a cassette tape, a data storage magnetic tape for digital data storage, and a video tape; food packaging materials such as a retort food pouch, individual packaging for confectionery, and packaging for processed meat products; and electronic part packaging materials such as packaging for semiconductor packages.

Examples of the household goods include valve/pump housings for tea and coffee makers, valve/pump housings for cooking appliances (such as a rice cooker and a steamer), steam-resistant parts (such as a top lid of a rice cooker) of cooking appliances (such as a rice cooker and a steamer), sliding parts (such as a gear) of cooking appliances (such as a rice cooker and a steamer), sliding parts of cooking utensils for business use (such as a gear for a gear pump), and steam-resistant parts of cooking utensils for business use (such as a pipe of a rice cooker for business use).

Examples of the leisure goods include a sport shoe insole, racket frame and grommets, golf club head and sleeve, fishing reel and rod, a boat screw, and bicycle suspension, gear, saddle, and bottle cage.

In particular, the polyamide composition of the present embodiment is excellent in moldability, heat resistance, and chemical resistance, and therefore is suitable as an injection-molded member, a heat-resistant film, a tube for transporting various drugs/drug solutions, an intake pipe, a blow-by tube, a substrate for a 3D printer, and the like, which are required to have high temperature characteristics and chemical resistance. In addition, it can be suitably used for molded articles for automotive applications required to have high heat resistance and chemical resistance, for example, interior and exterior parts of an automobile, parts in an engine room, a cooling system part, a sliding part, an electrical part, and the like. In addition, the polyamide composition of the present embodiment can be formed into a molded article required to have heat resistance adapting to a surface mounting process. Such a molded article can be suitably used for an electric part, an electronic part, a surface-mounted part such as a surface-mounted type connector, a socket, a camera module, a power supply component, a switch, a sensor, a capacitor seat plate, a hard disk part, a relay, a resistor, a fuse holder, a coil bobbin, or an IC housing, and the like.

Examples

Hereinafter, the present invention will be specifically described with reference to Examples and Comparative Examples, but the present invention is not limited thereto.

Each evaluation in Examples and Comparative Examples was performed in accordance with the following methods.

· Inherent viscosity

The solution viscosity (dL/g) of each of the polyamides obtained in Examples and Comparative Examples, using concentrated sulfuric acid as a solvent at a concentration of 0.2 g/dL and a temperature of 30°C, was determined by the following formula (Formula 2).

$$\eta = [\ln(t_1/t_0)]/c \quad \text{(Formula 2)}$$

In the above formula, $\eta$ represents the inherent viscosity (dL/g), $t_0$ represents the flow-down time (sec) of the solvent (concentrated sulfuric acid), ti represents the flow-down time (sec) of the sample solution, and c represents the concentration (g/dL) of the sample in the sample solution (that is, 0.2 g/dL).

· Melting point, crystallization temperature, and glass transition temperature

The melting point, crystallization temperature, and glass transition temperature of each of the polyamides obtained in Examples and Comparative Examples were measured using a differential scanning calorimetry analyzer "DSC7020" manufactured by Hitachi High-Tech Science Corporation.

The melting point and crystallization temperature were measured in accordance with ISO 11357-3 (2nd edition, 2011). Specifically, in a nitrogen atmosphere, a sample (polyamide) was heated from 30°C to 340°C at a rate of 10°C/min, held at 340°C for 5 minutes to completely melt the sample, then cooled to 50°C at a rate of 10°C/min, held at 50°C for 5 minutes, and then heated again to 340°C at a rate of 10°C/min. The peak temperature of the exothermic peak that appeared when the temperature was lowered was defined as the crystallization temperature, and the peak temperature of the endothermic peak that appeared when the temperature was raised again was defined as the melting point (°C).

The glass transition temperature (°C) was measured in accordance with ISO 11357-2 (2nd edition, 2013). Specifically, in a nitrogen atmosphere, a sample (polyamide) was heated from 30°C to 340°C at a rate of 20°C/min, held at 340°C for 5 minutes to completely melt the sample, then cooled to 50°C at a rate of 20°C/min, and held at 50°C for 5 minutes. The temperature at the inflection point that appeared when the temperature was raised again to 200°C at a rate of 20°C/min was defined as the glass transition temperature (°C).

· Crystallization rate

The crystallization rate of each of the polyamides obtained in Examples and Comparative Examples was obtained by the following formula (Formula 1).

$$\text{Crystallization rate } (°C^{-1}) = 1/(\text{melting point } (°C) - \text{crystallization temperature } (°C))$$

$$\text{(Formula 1)}$$

In (Formula 1), the "melting point (°C)" and the "crystallization temperature (°C)" are measured values obtained by the above-mentioned method. In Table 1, the unit of the crystallization rate is expressed as "1/°C", which has the same meaning as "°C$^{-1}$".

· Amount of terminal amino groups ([NH$_2$])

The amount of terminal amino groups of each of the polyamides obtained in Examples and Comparative Examples was determined by adding thymol blue, which is an indicator, to a solution in which 1 g of the polyamide was dissolved in 30 mL of phenol, and titrating the solution using a 0.01 mol/L aqueous hydrochloric acid solution, followed by calculation. In Tables 1 to 3, the amount of terminal amino groups of the polyamide is represented by [NH$_2$].

· Amount of terminal carboxy groups ([COOH])

The amount of terminal carboxy groups of each of the polyamides obtained in Examples and Comparative Examples was determined by titrating a solution, in which 0.5 g of the polyamide was dissolved in 40 mL of cresol, using a 0.01 mol/L potassium hydroxide solution by a potentiometric titration apparatus manufactured by Kyoto Electronics Co., Ltd., followed by calculation. In Tables 1 to 3, the amount of terminal carboxy groups of the polyamide is represented by [COOH].

<Polyamide Composition>

<<Production of Test Piece>>

An injection molding machine manufactured by Sumitomo Heavy Industries, Ltd. (clamping force: 100 tons, screw diameter: φ32 mm) was used, the polyamide compositions obtained in Examples and Comparative Examples were used, a cylinder temperature was set to a temperature 20 to 30°C higher than the melting point of the polyamide, and the polyamide compositions were molded with a T-runner mold to produce multi-purpose test pieces of type A1 (dumbbell-shaped test pieces described in JIS K 7139: 2009; 4 mm thick, total length: 170 mm, parallel part length: 80 mm, parallel part width: 10 mm) under the condition of a mold temperature of 140°C in the case of the polyamide compositions of Examples 1 to 8, 12, and 13 and Comparative Examples 1, 2, 3, 5, and 6, and under the condition of a mold temperature of 170°C in the case of the polyamide compositions of Example 11 and Comparative Example 4.

· Flexural strength and flexural modulus

A flexural strength (MPa) and a flexural modulus (GPa) were measured by a universal material testing machine (manufactured by Instron) under the conditions of a test speed of 2 mm/min and a distance between fulcrums of 64 mm in accordance with ISO 178 (2nd edition, 2012) using a multi-purpose test piece of type A1 (4 mm thick) produced by the above-mentioned method.

· Color stability

A multi-purpose test piece of type A1 (4 mm thick) produced by the above-mentioned method was subjected to a heat treatment in a hot air dryer at 150°C for 50 hours. A change in color of the test piece after the treatment was observed through visual inspection, and compared with the test piece before the heat treatment, and the hue stability was evaluated according to the following criteria.

- A: There is no change in color.
- B: There is a slight change in color to yellow, which is at a level that does not pose a problem in practical use.
- C: There is a clear change in color to yellow, which is at a level not suitable for practical use.

· Heat aging resistance

A multi-purpose test piece of type A1 (4 mm thick) produced by the above-mentioned method was subjected to a heat treatment in a hot air dryer at 150°C for 50 hours. The molecular weights of the test piece which was taken out and the test piece which was not subjected to the heat treatment were measured, and the rate of change in molecular weight was calculated from the following formula (Formula 3). The heat aging resistance was evaluated based on the calculated rate of change in molecular weight according to the following criteria. "A" and "B" were determined to be acceptable, and "C" and "D" were determined to be unacceptable. The molecular weight of the test piece was measured according to the below-mentioned Measurement of molecular weight.

Rate of change in molecular weight (%) = ((molecular weight after heat treatment - molecular weight before heat treatment)/(molecular weight before heat treatment)) × 100    (Formula 3)

- A: The rate of change in molecular weight is less than ±10%.
- B: The rate of change in molecular weight is ±10% or more and less than ±20%.
- C: The rate of change in molecular weight is ±20% or more and less than ±30%.
- D: The rate of change in molecular weight is ±30% or more.

· Hydrolysis resistance

A multi-purpose test piece of type A1 (4 mm thick) produced by the above-mentioned method was immersed in an antifreeze solution (an aqueous solution obtained by 2-fold dilution of "Super Long Life Coolant" (Pink) manufactured by Toyota Motor Corporation) in a pressure-resistant container, and subjected to an immersion treatment by leaving the pressure-resistant container to stand in a constant temperature bath set to 130°C for 100 hours. The molecular weights of the test piece which was taken out and the test piece which was not subjected to the immersion treatment were measured, and the rate of change in molecular weight was calculated from the following formula (Formula 4). The hydrolysis resistance was evaluated based on the calculated rate of change in molecular weight according to the following criteria. "A" and "B" were determined to be acceptable, and "C" and "D" were determined to be unacceptable. The molecular weight of the test piece was measured according to the below-mentioned Measurement of molecular weight.

$$\text{Rate of change in molecular weight (\%)} = ((\text{molecular weight after immersion treatment - molecular weight before immersion treatment})/(\text{molecular weight before immersion treatment})) \times 100 \qquad \text{(Formula 4)}$$

- • A: The rate of change in molecular weight is less than $\pm 10\%$.
- • B: The rate of change in molecular weight is $\pm 10\%$ or more and less than $\pm 20\%$.
- • C: The rate of change in molecular weight is $\pm 20\%$ or more and less than $\pm 30\%$.
- • D: The rate of change in molecular weight is $\pm 30\%$ or more.

· Measurement of molecular weight

The molecular weight of the multi-purpose test piece of type A1 was obtained as a standard polymethylmethacrylate equivalent molecular weight by gel permeation chromatography (GPC). Specifically, an HFIP solution in which sodium trifluoroacetate was dissolved in a proportion of 0.85 g with respect to 1 kg of 1,1,1,3,3,3-hexafluoroisopropanol (HFIP) was used as an eluent, 1.5 mg of a sample (the above-mentioned multi-purpose test piece of type A1) was weighed in terms of resin, and dissolved in 3 mL of the above-mentioned eluent. The solution was allowed to pass through a 0.2 $\mu$m membrane filter to produce a measurement sample, and measurement was performed under the following conditions.

(Measurement conditions)

Apparatus: HLC-8320GPC (manufactured by Tosoh Corporation)
Column: Two TSKgel SuperHM-H columns (manufactured by Tosoh Corporation) were connected in series.
Eluent: 10 mmol/L sodium trifluoroacetate/HFIP solution
Flow rate: 0.5 mL/min (reference column: 0.25 mL/min)
Sample injection volume: 30 $\mu$L
Column temperature: 40°C
Standard polymethylmethacrylate: Shodex Standard M-75 manufactured by Showa Denko K.K., Polymethylmethacrylate manufactured by Agilent Technologies, Inc. Molecular weight: 1010, 535 Polymethylmethacrylate
Detector: UV (254 nm) detector

· Moldability

The shortest cooling time in which no sink marks or voids were observed on the test piece and the test piece was smoothly released from the mold when the multi-purpose test piece of type A1 (4 mm thick) was produced by the above-mentioned method was set. A case where the set value of the cooling time is less than 10 seconds was determined to be "A", a case where the set value is more than 10 seconds and 15 seconds or less was determined to be "B", and a case where the set value is more than 15 seconds was determined to be "C". "A" and "B" were determined to be acceptable, and "C" was determined to be unacceptable.
The respective components used to prepare the polyamide compositions in Examples and Comparative Examples are shown.

<Copper compound (B1) and metal halide (B2)>

"KG HS01-P" (molar ratio: CuI/KI = 1/10), manufactured by PolyAd Services Inc.

<Other additives>

· Lubricant
"LICOWAX OP" (manufactured by Clariant Chemicals Ltd.)
· Nucleating agent
"TALC ML112" (manufactured by Fuji Talc Industrial Co., Ltd.)
· Filler
Glass fiber "CS03JA-FT2A" (manufactured by Owens Corning Japan LLC)
· Colorant
Carbon black "#980B" (manufactured by Mitsubishi Chemical Corporation)

[Example 1]

5,400 g of terephthalic acid, 5,260 g of a mixture [4/1/95 (molar ratio)] of 2-ethyl-1,7-heptanediamine, 2-propyl-1,6-hexanediamine, and 2-methyl-1,8-octanediamine, 121 g of benzoic acid, 10 g of sodium hypophosphite monohydrate (0.1% by mass with respect to the total mass of the raw materials), and 4.8 L of distilled water were put into an autoclave having an internal volume of 40 L, and nitrogen replacement was performed. The mixture was stirred at 150°C for 30 minutes, and then the temperature inside the autoclave was raised to 220°C over 2 hours. At this time, the pressure inside the autoclave was increased to 2 MPa. Heating was continued for 5 hours while the pressure was maintained at 2 MPa, and the reaction was allowed to proceed by gradually removing the water vapor. Subsequently, the pressure was decreased to 1.3 MPa over 30 minutes, and the reaction was further allowed to proceed for 1 hour to obtain a prepolymer. The obtained prepolymer was dried at 100°C under reduced pressure for 12 hours, and pulverized to a particle diameter of 2 mm or less. This was subjected to solid phase polymerization at 230°C and 13 Pa (0.1 mmHg) for 10 hours to obtain a polyamide (A) having a melting point of 282°C.
The obtained polyamide (A), the copper compound (B1) and the metal halide (B2), the lubricant, the nucleating agent, and the colorant were used in the proportions shown in Table 1 and fed from the upstream hopper of a twin screw extruder ("BTN-32" manufactured by Plastics Technology Co., Ltd.), melt-kneaded, extruded, cooled, and cut to obtain a polyamide composition in a pellet form.

[Example 2]

A polyamide (A) having a melting point of 283°C was produced in the same manner as in Example 1 except that the diamine unit was changed to a mixture [5.6/0.4/94 (molar ratio)] of 2-ethyl-1,7-heptanediamine, 2-propyl-1,6-hexanediamine, and 2-methyl-1,8-octanediamine, and a polyamide composition was obtained in the same manner as in Example 1 except that the thus obtained polyamide (A) was used.

[Example 3]

A polyamide (A) having a melting point of 262°C was produced in the same manner as in Example 1 except that the diamine unit was changed to a mixture [12/3/85 (molar ratio)] of 2-ethyl-1,7-heptanediamine, 2-propyl-1,6-hexanediamine, and 2-methyl-1,8-octanediamine, and a polyamide composition was obtained in the same manner as in Example 1 except that the thus obtained polyamide (A) was used.

[Example 4]

A polyamide (A) having a melting point of 258°C was produced in the same manner as in Example 1 except that the diamine unit was changed to a mixture [16/4/80 (molar ratio)] of 2-ethyl-1,7-heptanediamine, 2-propyl-1,6-hexanediamine, and 2-methyl-1,8-octanediamine, and a polyamide composition was obtained in the same manner as in Example 1 except that the thus obtained polyamide (A) was used.

[Example 5]

A polyamide (A) having a melting point of 288°C was produced in the same manner as in Example 1 except that the diamine unit was changed to a mixture [4/1/20/75 (molar ratio)] of 2-ethyl-1,7-heptanediamine, 2-propyl-1,6-hexanediamine, 2-methyl-1,8-octanediamine, and 1,9-nonanediamine, and a polyamide composition was obtained in the same manner as in Example 1 except that the thus obtained polyamide (A) was used.

[Example 6]

A polyamide (A) obtained by the same procedure as in Example 5, the copper compound (B1) and the metal halide (B2), the lubricant, the nucleating agent, and the colorant were used in the proportions shown in Table 1 and fed from the upstream hopper of a twin screw extruder ("BTN-32" manufactured by Plastics Technology Co., Ltd.), and also the filler was fed in the proportion shown in Table 1 from the side feed port on the downstream side of the extruder, melt-kneaded, extruded, cooled, and cut to obtain a polyamide composition in a pellet form.

[Example 7]

A polyamide composition was obtained in the same manner as in Example 6 except that the composition was changed to the proportions shown in Table 1.

[Example 8]

A polyamide (A) having a melting point of 288°C was produced in the same manner as in Example 1 except that 5,380 g of a mixture [4/1/20/75 (molar ratio)] of 2-ethyl-1,7-heptanediamine, 2-propyl-1,6-hexanediamine, 2-methyl-1,8-octanediamine, and 1,9-nonanediamine was used as the diamine unit, and a polyamide composition was obtained in the same manner as in Example 1 except that the thus obtained polyamide (A) was used.

[Example 9]

A polyamide (A) having a melting point of 288°C was produced in the same manner as in Example 1 except that 5,540 g of a mixture [4/1/20/75 (molar ratio)] of 2-ethyl-1,7-heptanediamine, 2-propyl-1,6-hexanediamine, 2-methyl-1,8-octanediamine, and 1,9-nonanediamine was used as the diamine unit, and a polyamide composition was obtained in the same manner as in Example 1 except that the thus obtained polyamide (A) was used.

[Example 10]

A polyamide (A) having a melting point of 307°C was produced in the same manner as in Example 1 except that the diamine unit was changed to a mixture [0.5/14.5/85 (molar ratio)] of 2-ethyl-1,7-heptanediamine, 2-methyl-1,8-octanediamine, and 1,9-nonanediamine, and a polyamide composition was obtained in the same manner as in Example 1 except that the thus obtained polyamide (A) was used.

[Comparative Example 1]

The polyamide (A) obtained in Example 5 was used for evaluation as it was without blending the copper compound (B1), the metal halide (B2), and other additives.

[Comparative Example 2]

A polyamide having a melting point of 285°C was produced in the same manner as in Example 1 except that the diamine unit was changed to 2-methyl-1,8-octanediamine, and a polyamide composition was obtained in the same manner as in Example 1 except that the thus obtained polyamide was used.

[Comparative Example 3]

A polyamide having a melting point of 306°C was produced in the same manner as in Example 1 except that the diamine unit was changed to a mixture [15/85 (molar ratio)] of 2-methyl-1,8-octanediamine and 1,9-nonanediamine, and a polyamide composition was obtained in the same manner as in Example 1 except that the thus obtained polyamide was used.

[Example 11]

A polyamide (A) having a melting point of 283°C was produced in the same manner as in Example 1 except that the dicarboxylic acid unit was changed to 7,027 g of naphthalenedicarboxylic acid, and the diamine unit was changed to a mixture [4/1/20/75 (molar ratio)] of 2-ethyl-1,7-heptanediamine, 2-propyl-1,6-hexanediamine, 2-methyl-1,8-octanediamine, and 1,9-nonanediamine, and a polyamide composition was obtained in the same manner as in Example 1 except that the thus obtained polyamide (A) was used.

[Comparative Example 4]

A polyamide having a melting point of 294°C was produced in the same manner as in Example 1 except that the dicarboxylic acid unit was changed to 7,027 g of naphthalenedicarboxylic acid, and the diamine unit was changed to a mixture [15/85 (molar ratio)] of 2-methyl-1,8-octanediamine and 1,9-nonanediamine, and a polyamide composition was obtained in the same manner as in Example 1 except that the thus obtained polyamide was used.

[Example 12]

A polyamide (A) having a melting point of 292°C was produced in the same manner as in Example 1 except that the dicarboxylic acid unit was changed to 5,600 g of cyclohexanedicarboxylic acid (cis/trans = 79.9/20.1), and the diamine unit was changed to a mixture [4/1/20/75 (molar ratio)] of 2-ethyl-1,7-heptanediamine, 2-propyl-1,6-hexanediamine, 2-methyl-1,8-octanediamine, and 1,9-nonanediamine, and a polyamide composition was obtained in the same manner as in Example 1 except that the thus obtained polyamide (A) was used.

[Comparative Example 5]

A polyamide having a melting point of 301°C was produced in the same manner as in Example 1 except that the dicarboxylic acid unit was changed to 5,600 g of cyclohexanedicarboxylic acid (cis/trans = 79.9/20.1), and the diamine unit was changed to a mixture [15/85 (molar ratio)] of 2-methyl-1,8-octanediamine and 1,9-nonanediamine, and a polyamide composition was obtained in the same manner as in Example 1 except that the thus obtained polyamide was used.

[Example 13]

A polyamide (A) having a melting point of 289°C was produced in the same manner as in Example 1 except that the diamine unit was changed to a mixture [4/1/20/75 (molar ratio)] of 2-ethyl-1,7-heptanediamine, 2-propyl-1,6-hexanediamine, 2-methyl-1,8-octanediamine, and 1,10-decanediamine, and a polyamide composition was obtained in the same manner as in Example 1 except that the thus obtained polyamide (A) was used.

[Comparative Example 6]

A polyamide having a melting point of 301°C was produced in the same manner as in Example 1 except that the diamine unit was changed to a mixture [20/80 (molar ratio)] of 2-methyl-1,8-octanediamine and 1,10-decanediamine, and a polyamide composition was obtained in the same manner as in Example 1 except that the thus obtained polyamide was used.

The compositions of Examples and Comparative Examples and the measurement results thereof are shown in Tables 1 to 3.

Table 1

| Component or physical properties | | | Unit | Example 1 | Example 2 | Example 3 | Example 4 | Example 5 | Example 6 | Example 7 |
|---|---|---|---|---|---|---|---|---|---|---|
| Diamine unit (X) | (X1) | EHDA | mol% | 4 | 5.6 | 12 | 16 | 4 | 4 | 4 |
| | | PHDA | mol% | 1 | 0.4 | 3 | 4 | 1 | 1 | 1 |
| | (X2) | MODA | mol% | 95 | 94 | 85 | 80 | 20 | 20 | 20 |
| | | NMDA | mol% | - | - | - | - | 75 | 75 | 75 |
| | | DMDA | mol% | - | - | - | - | - | - | - |
| | EHDA+PHDA | | mol% | 5 | 6 | 15 | 20 | 5 | 5 | 5 |
| Dicarboxylic acid unit (Y) | TA | | mol% | 100 | 100 | 100 | 100 | 100 | 100 | 100 |
| | NDCA | | mol% | - | - | - | - | - | - | - |
| | CHDA | | mol% | - | - | - | - | - | - | - |
| Physical properties of polyamide (A) or polyamide | Solution viscosity | | dl/g | 1.17 | 1.16 | 1.18 | 1.21 | 1.25 | 1.25 | 1.25 |
| | Melting point | | °C | 282 | 283 | 262 | 258 | 288 | 288 | 288 |
| | Crystallization temperature | | °C | 259 | 258 | 242 | 235 | 266 | 266 | 266 |
| | Glass transition temperature | | °C | 124 | 123 | 116 | 112 | 120 | 120 | 120 |
| | Crystallization rate | | 1/°C | 0.044 | 0.040 | 0.050 | 0.043 | 0.046 | 0.046 | 0.046 |
| | $[NH_2]$ | | $\mu$mol/g | 15 | 18 | 20 | 25 | 12 | 12 | 12 |
| | [COOH] | | $\mu$mol/g | 33 | 37 | 48 | 34 | 30 | 30 | 30 |
| | $[NH_2]$/[COOH] | | - | 0.5 | 0.5 | 0.4 | 0.7 | 0.4 | 0.4 | 0.4 |
| Polyamide composition | Polyamide | | parts by mass | 99.7 | 99.7 | 99.7 | 99.7 | 99.7 | 66.1 | 49.7 |
| | Copper compound (B1) and metal halide (B2) | | parts by mass | 0.8 | 0.8 | 0.8 | 0.8 | 0.8 | 0.6 | 0.4 |
| | Filler | | parts by mass | - | - | - | - | - | 33.0 | 49.7 |
| | Lubricant | | parts by mass | 0.2 | 0.2 | 0.2 | 0.2 | 0.2 | 0.1 | 0.1 |
| | Nucleating agent | | parts by mass | 0.1 | 0.1 | 0.1 | 0.1 | 0.1 | 0.1 | 0.05 |
| | Colorant | | parts by mass | 0.2 | 0.2 | 0.2 | 0.2 | 0.2 | 0.1 | 0.1 |

(continued)

| Component or physical properties | | Unit | Example 1 | Example 2 | Example 3 | Example 4 | Example 5 | Example 6 | Example 7 |
|---|---|---|---|---|---|---|---|---|---|
| Physical properties of polyamide composition | Flexural strength | MPa | 115 | 110 | 111 | 110 | 107 | 265 | 370 |
| | Flexural modulus | GPa | 2.5 | 2.4 | 2.4 | 2.3 | 2.4 | 8.9 | 15.3 |
| | Color stability | - | A | A | A | A | A | A | A |
| | Heat aging resistance | - | A | A | A | A | A | A | A |
| | Hydrolysis resistance | - | A | A | A | A | B | B | B |
| | Moldability | - | A | A | A | A | A | A | A |

Table 2

| Component or physical properties | | | Unit | Example 8 | Example 9 | Example 10 | Comparative Example 1 | Comparative Example 2 | Comparative Example 3 |
|---|---|---|---|---|---|---|---|---|---|
| Diamine unit (X) | (X1) | EHDA | mol% | 4 | 4 | 0.5 | 4 | - | - |
| | | PHDA | mol% | 1 | 1 | - | 1 | - | - |
| | (X2) | MODA | mol% | 20 | 20 | 14.5 | 20 | 100 | 15 |
| | | NMDA | mol% | 75 | 75 | 85 | 75 | - | 85 |
| | | DMDA | mol% | - | - | - | - | - | - |
| | EHDA+PHDA | | mol% | 5 | 5 | 0.5 | 5 | - | - |
| Dicarboxylic acid unit (Y) | TA | | mol% | 100 | 100 | 100 | 100 | 100 | 100 |
| | NDCA | | mol% | - | - | - | - | - | - |
| | CHDA | | mol% | - | - | - | - | - | - |
| Physical properties of polyamide (A) or polyamide | Solution viscosity | | dl/g | 1.25 | 1.25 | 1.26 | 1.25 | 1.32 | 1.34 |
| | Melting point | | °C | 288 | 288 | 307 | 288 | 285 | 306 |
| | Crystallization temperature | | °C | 266 | 266 | 280 | 266 | 256 | 277 |
| | Glass transition temperature | | °C | 120 | 120 | 123 | 120 | 125 | 123 |
| | Crystallization rate | | 1/°C | 0.046 | 0.046 | 0.037 | 0.046 | 0.034 | 0.035 |
| | $[NH_2]$ | | μmol/g | 70 | 150 | 10 | 12 | 18 | 10 |
| | [COOH] | | μmol/g | 20 | 3 | 25 | 30 | 38 | 24 |
| | $[NH_2]/[COOH]$ | | - | 3.5 | 50 | 0.4 | 0.4 | 0.5 | 0.4 |

(continued)

| Component or physical properties | | Unit | Example 8 | Example 9 | Example 10 | Comparative Example 1 | Comparative Example 2 | Comparative Example 3 |
|---|---|---|---|---|---|---|---|---|
| Polyamide composition | Polyamide | parts by mass | 99.7 | 99.7 | 99.7 | 100 | 99.7 | 99.7 |
| | Copper compound (B1) and metal halide (B2) | parts by mass | 0.8 | 0.8 | 0.8 | - | 0.8 | 0.8 |
| | Filler | parts by mass | - | - | - | - | - | - |
| | Lubricant | parts by mass | 0.2 | 0.2 | 0.2 | - | 0.2 | 0.2 |
| | Nucleating agent | parts by mass | 0.1 | 0.1 | 0.1 | - | 0.1 | 0.1 |
| | Colorant | parts by mass | 0.2 | 0.2 | 0.2 | - | 0.2 | 0.2 |
| Physical properties of polyamide composition | Flexural strength | MPa | 110 | 112 | 111 | 115 | 102 | 103 |
| | Flexural modulus | GPa | 2.4 | 2.4 | 2.3 | 2.5 | 2.1 | 2.2 |
| | Color stability | - | B | B | A | C | A | A |
| | Heat aging resistance | - | B | B | A | D | A | A |
| | Hydrolysis resistance | - | A | A | B | D | D | D |
| | Moldability | - | A | A | B | C | C | C |

Table 3

| Component or physical properties | | | Unit | Example 11 | Comparative Example 4 | Example 12 | Comparative Example 5 | Example 13 | Comparative Example 6 |
|---|---|---|---|---|---|---|---|---|---|
| Diamine unit (X) | (X1) | EHDA | mol% | 4 | - | 4 | - | 4 | - |
| | | PHDA | mol% | 1 | - | 1 | - | 1 | - |
| | (X2) | MODA | mol% | 20 | 15 | 20 | 15 | 20 | 20 |
| | | NMDA | mol% | 75 | 85 | 75 | 85 | - | - |
| | | DMDA | mol% | - | - | - | - | 75 | 80 |
| | EHDA+PHDA | | mol% | 5 | - | 5 | - | 5 | - |
| Dicarboxylic acid unit (Y) | TA | | mol% | - | - | - | - | 100 | 100 |
| | NDCA | | mol% | 100 | 100 | - | - | - | - |
| | CHDA | | mol% | - | - | 100 | 100 | - | - |

(continued)

| Component or physical properties | | Unit | Example 11 | Comparative Example 4 | Example 12 | Comparative Example 5 | Example 13 | Comparative Example 6 |
|---|---|---|---|---|---|---|---|---|
| Physical properties of polyamide (A) or polyamide | Solution viscosity | dl/g | 1.22 | 1.23 | 1.28 | 1.3 | 1.23 | 1.21 |
| | Melting point | °C | 283 | 294 | 292 | 301 | 289 | 301 |
| | Crystallization temperature | °C | 246 | 249 | 270 | 276 | 267 | 275 |
| | Glass transition temperature | °C | 135 | 136 | 125 | 130 | 121 | 123 |
| | Crystallization rate | 1/°C | 0.027 | 0.022 | 0.045 | 0.040 | 0.045 | 0.039 |
| | $[NH_2]$ | $\mu$mol/g | 28 | 22 | 13 | 10 | 12 | 8 |
| | [COOH] | $\mu$mol/g | 40 | 35 | 38 | 35 | 38 | 30 |
| | $[NH_2]$/[COOH] | - | 0.7 | 0.6 | 0.3 | 0.3 | 0.3 | 0.3 |
| Polyamide composition | Polyamide | parts by mass | 99.7 | 99.7 | 99.7 | 99.7 | 99.7 | 99.7 |
| | Copper compound (B1) and metal halide (B2) | parts by mass | 0.8 | 0.8 | 0.8 | 0.8 | 0.8 | 0.8 |
| | Filler | parts by mass | - | - | - | - | - | - |
| | Lubricant | parts by mass | 0.2 | 0.2 | 0.2 | 0.2 | 0.2 | 0.2 |
| | Nucleating agent | parts by mass | 0.1 | 0.1 | 0.1 | 0.1 | 0.1 | 0.1 |
| | Colorant | parts by mass | 0.2 | 0.2 | 0.2 | 0.2 | 0.2 | 0.2 |
| Physical properties of polyamide composition | Flexural strength | MPa | 129 | 125 | 103 | 104 | 110 | 112 |
| | Flexural modulus | GPa | 2.8 | 2.7 | 2.1 | 2.1 | 2.3 | 2.4 |
| | Color stability | - | A | A | A | A | A | A |
| | Heat aging resistance | - | A | A | A | A | A | A |
| | Hydrolysis resistance | - | B | D | B | D | B | D |
| | Moldability | - | B | C | A | C | A | C |

The abbreviations relating to the compounds used in Tables 1 to 3 above and the contents of the compounds are as shown in Table 4 below. In addition, "(EHDA + PHDA)" in Tables 1 to 3 represents the sum of the blending amounts (mol%) of EHDA and PHDA in the diamine unit.

Table 4

| Abbreviation | Compound |
| --- | --- |
| EHDA | 2-ethyl-1,7-heptanediamine |
| PHDA | 2-propyl-1,6-hexanediamine |
| MODA | 2-methyl-1,8-octanediamine |
| NMDA | 1,9-nonanediamine |
| DMDA | 1,10-decanediamine |
| TA | terephthalic acid |
| NDCA | 2,6-naphthalenedicarboxylic acid |
| CHDA | 1,4-cyclohexanedicarboxylic acid |

In Tables 1 to 3, it can be seen that when Examples 1 to 10 and Comparative Examples 2 and 3, Example 11 and Comparative Example 4, Example 12 and Comparative Example 5, and Example 13 and Comparative Example 6 are compared, respectively, the polyamide (A) used in the polyamide compositions of Examples has a high crystallization rate and shows a short cooling time during injection molding. Then, it can be seen that the moldability of the polyamide compositions of the respective Comparative Examples is inferior to the moldability of the polyamide compositions of Examples. That is, it can be understood that when a polyamide composition containing a common dicarboxylic acid unit contains a specific amount of a constituent unit derived from at least one of 2-ethyl-1,7-heptanediamine and 2-propyl-1,6-hexanediamine as the diamine unit, a polyamide composition having high moldability and excellent productivity due to the high crystallization rate of the polyamide (A) is obtained.

Further, in the polyamide (A) contained in the polyamide compositions of Examples, the branched aliphatic diamine unit contained in a specific amount is a constituent unit derived from at least one of 2-ethyl-1,7-heptanediamine and 2-propyl-1,6-hexanediamine. However, it can be seen that the decrease in melting point and glass transition temperature is small, and the heat resistance is less likely to decrease as compared with the polyamide, which is contained in the polyamide compositions of Comparative Examples 2 to 6, and in which the branched aliphatic diamine unit is a constituent unit derived only from 2-methyl-1,8-octanediamine having a methyl group as the branched structure.

Then, it can be seen that by further incorporation of the copper compound (B 1) and the metal halide (B2), the polyamide compositions of Examples also have excellent heat aging resistance while having excellent moldability, and further have excellent hydrolysis resistance and hue stability as compared with the polyamide compositions of Comparative Examples.

Further, it can be seen that as apparent from the comparison with Example 5, by incorporation of the filler, the polyamide compositions of Examples 6 and 7 further have remarkably enhanced flexural strength and flexural modulus while maintaining the moldability, heat aging resistance, hydrolysis resistance, and hue stability.

Industrial Applicability

The polyamide composition of the present invention has high moldability and excellent heat resistance and chemical resistance. Therefore, the polyamide composition of the present invention can be used as various molded articles required to have heat resistance and chemical resistance, and can improve productivity when molded articles are produced, and is very useful.

The present application is based on a Japanese patent application (Japanese Patent Application No. 2021-206203) filed on December 20, 2021, which is incorporated by reference in its entirety.

Claims

1.  A polyamide composition comprising a polyamide (A), a copper compound (B 1) and a metal halide (B2), wherein

the polyamide (A) comprises a diamine unit (X) and a dicarboxylic acid unit (Y),
the diamine unit (X) comprises 0.1 mol% or more and less than 36 mol% of a diamine unit (X1), and
the diamine unit (X1) is a constituent unit derived from an aliphatic diamine, wherein the aliphatic diamine has 6 to 10 carbon atoms, the aliphatic diamine having an alkyl group having 2 or 3 carbon atoms bonded to a carbon atom at 2-position when a carbon atom to which any one of two amino groups is bonded is taken as 1-position.

2. The polyamide composition according to claim 1, wherein the diamine unit (X1) is a constituent unit derived from the aliphatic diamine having 9 carbon atoms.

3. The polyamide composition according to claim 1 or 2, wherein the diamine unit (X1) is a constituent unit derived from at least one selected from the group consisting of 2-ethyl-1,7-heptanediamine and 2-propyl-1,6-hexanediamine.

4. The polyamide composition according to any one of claims 1 to 3, wherein the diamine unit (X) comprises 1 to 10 mol% of the diamine unit (X1).

5. The polyamide composition according to any one of claims 1 to 4, wherein the diamine unit (X) further comprises a diamine unit (X2) which is a diamine unit other than the diamine unit (X1), and the diamine unit (X2) is a constituent unit derived from at least one selected from the group consisting of a linear aliphatic diamine, a branched aliphatic diamine other than the aliphatic diamine constituting the diamine unit (X1), an alicyclic diamine, and an aromatic diamine.

6. The polyamide composition according to claim 5, wherein the diamine unit (X2) is a constituent unit derived from at least one selected from the group consisting of a linear aliphatic diamine and a branched aliphatic diamine having a methyl group as a branched chain.

7. The polyamide composition according to claim 5 or 6, wherein the diamine unit (X2) is a constituent unit derived from a diamine having 6 to 10 carbon atoms.

8. The polyamide composition according to any one of claims 5 to 7, wherein the diamine unit (X2) is a constituent unit derived from at least one selected from the group consisting of 1,6-hexanediamine, 1,9-nonanediamine, 1,10-decanediamine, 2-methyl-1,5-pentanediamine, and 2-methyl-1,8-octanediamine.

9. The polyamide composition according to any one of claims 1 to 8, wherein the dicarboxylic acid unit (Y) comprises a constituent unit derived from at least one selected from the group consisting of an aliphatic dicarboxylic acid, an aromatic dicarboxylic acid, and an alicyclic dicarboxylic acid.

10. The polyamide composition according to any one of claims 1 to 9, wherein the dicarboxylic acid unit (Y) comprises a constituent unit derived from at least one selected from the group consisting of terephthalic acid, cyclohexanedicarboxylic acid, and naphthalenedicarboxylic acid.

11. The polyamide composition according to any one of claims 1 to 10, wherein the copper compound (B1) is contained in an amount of 0.01 parts by mass or more and 2 parts by mass or less with respect to 100 parts by mass of the polyamide (A).

12. The polyamide composition according to any one of claims 1 to 11, wherein the copper compound (B 1) is at least one selected from the group consisting of copper iodide, copper bromide, and copper acetate.

13. The polyamide composition according to any one of claims 1 to 12, wherein the metal halide (B2) is contained in an amount of 0.05 parts by mass or more and 10 parts by mass or less with respect to 100 parts by mass of the polyamide (A).

14. The polyamide composition according to any one of claims 1 to 13, wherein the metal halide (B2) is at least one selected from the group consisting of potassium iodide and potassium bromide.

15. A molded article comprising the polyamide composition according to any one of claims 1 to 14.

16. The molded article according to claim 15, which is a film.

## INTERNATIONAL SEARCH REPORT

International application No.

**PCT/JP2022/046616**

### A. CLASSIFICATION OF SUBJECT MATTER

**C08L 77/06**(2006.01)i; **C08G 69/26**(2006.01)i; **C08K 3/16**(2006.01)i; **C08K 3/24**(2006.01)i
FI: C08L77/06; C08K3/16; C08K3/24; C08G69/26

According to International Patent Classification (IPC) or to both national classification and IPC

### B. FIELDS SEARCHED

Minimum documentation searched (classification system followed by classification symbols)

C08L77/06; C08G69/26; C08K3/16; C08K3/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | WO 2020/040282 A1 (KURARAY CO., LTD.) 27 February 2020 (2020-02-27) entire text | 1-16 |
| A | JP 2020-29538 A (KURARAY CO., LTD.) 27 February 2020 (2020-02-27) entire text | 1-16 |
| A | JP 59-136370 A (CHEM. WERKE HUELS AG) 04 August 1984 (1984-08-04) entire text | 1-16 |
| A | JP 52-41692 A (DYNAMIT NOBEL AG) 31 March 1977 (1977-03-31) entire text | 1-16 |
| A | JP 3-140327 A (HUELS AG) 14 June 1991 (1991-06-14) entire text | 1-16 |
| P, A | WO 2022/091987 A1 (KURARAY CO., LTD.) 05 May 2022 (2022-05-05) entire text | 1-16 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 February 2023** | **28 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/046616**

| Patent document cited in search report | | | Publication date (day/month/year) | Patent family member(s) | | | Publication date (day/month/year) |
|---|---|---|---|---|---|---|---|
| WO | 2020/040282 | A1 | 27 February 2020 | US | 2021/0179778 | A1 | |
| | | | | entire text | | | |
| | | | | EP | 3842471 | A1 | |
| | | | | CN | 112601776 | A | |
| | | | | KR | 10-2021-0048486 | A | |
| | | | | BR | 112021001692 | A2 | |
| | | | | TW | 202017968 | A | |
| JP | 2020-29538 | A | 27 February 2020 | (Family: none) | | | |
| JP | 59-136370 | A | 04 August 1984 | US | 4566931 | A | |
| | | | | entire text | | | |
| | | | | EP | 120129 | A1 | |
| | | | | DE | 3248776 | A1 | |
| | | | | PL | 245405 | A1 | |
| | | | | ES | 528598 | A1 | |
| | | | | BR | 8307210 | A | |
| | | | | CA | 1206686 | A | |
| | | | | HK | 98288 | A | |
| | | | | AU | 2299283 | A | |
| JP | 52-41692 | A | 31 March 1977 | US | 4111921 | A | |
| | | | | entire text | | | |
| | | | | GB | 1557272 | A | |
| | | | | DE | 2542938 | A1 | |
| | | | | FR | 2325673 | A1 | |
| JP | 3-140327 | A | 14 June 1991 | US | 5300557 | A | |
| | | | | entire text | | | |
| | | | | EP | 423472 | A2 | |
| | | | | DE | 3934926 | A1 | |
| | | | | CA | 2027965 | A1 | |
| WO | 2022/091987 | A1 | 05 May 2022 | (Family: none) | | | |

Form PCT/ISA/210 (patent family annex) (January 2015)

**EP 4 455 214 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011080055 A
- JP 2017517594 A
- JP H07228690 A
- JP 2021206203 A